(19) **Europäisches Patentamt / European Patent Office / Office européen des brevets**

(11) **EP 2 623 560 A1**

(12) # EUROPEAN PATENT APPLICATION
published in accordance with Art. 153(4) EPC

(43) Date of publication:
**07.08.2013 Bulletin 2013/32**

(21) Application number: **11829377.8**

(22) Date of filing: **30.09.2011**

(51) Int Cl.:
**C08L 53/00** (2006.01)    **C08J 9/08** (2006.01)
**C08L 23/08** (2006.01)    **C08L 23/10** (2006.01)

(86) International application number:
**PCT/JP2011/072647**

(87) International publication number:
**WO 2012/043824 (05.04.2012 Gazette 2012/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2010   JP 2010222650**

(71) Applicant: **Tosoh Corporation
Yamaguchi 746-8501 (JP)**

(72) Inventors:
• **ABE, Shigehiko
Yokkaichi-shi,
Mie 510-8540 (JP)**
• **SUZUKI, Ken-ichi
Yokkaichi-shi,
Mie 510-8540 (JP)**

(74) Representative: **Vossius & Partner
Siebertstrasse 4
81675 München (DE)**

(54) **RESIN COMPOSITION FOR INJECTION MOLDING, INJECTION MOLDED FOAM ARTICLE, AND METHOD FOR PRODUCING INJECTION MOLDED FOAM ARTICLE**

(57)    A resin composition for injection molding comprising (I) 70-90 wt. parts of a propylene polymer resin having a MFR of at least 30 g/10 min. but smaller than 200 g/10 min. as measured at 230°C according to ASTM D-1238, (II) 5-25 wt. parts of an ethylene-$\alpha$-olefin copolymer having a melt strength ($MS_{160}$) of larger than 50 mN but not larger than 300 mN as measured at 160°C, and (III) 5-25 wt. parts of an olefin polymer resin having a density of at least 850 $kg/m^3$ but not larger than 930 $kg/m^3$ as measured according to JIS K6760, and a melt strength ($MS_{160}$) of smaller than 30 mN as measured at 160°C, wherein the sum of (I), (II) and (III) is 100 wt. parts. This resin composition gives an injection molded article exhibiting enhanced impact strength at a low temperature and having no or minimized flow marks on the surface thereof.

EP 2 623 560 A1

**Description**

Resin Composition for Injection Molding, Injection Molded Foam Article and Method for Producing Injection Molded Foam Article

Technical Field

This invention relates to a resin composition for injection molding, an injection molded foam article, and a method for producing the injection molded foam article.
The resin composition for injection molding according to the present invention is suitable for producing an injection molded article, especially an injection molded foam article, exhibiting enhanced impact strength at a low temperature, and having no or minimized flow mark.

Background Art

Polypropylene resins have good stiffness, hardness and heat resistance, and are capable of being easily injection molded into articles having desired shapes, and inexpensive. Therefore, polypropylene resins are widely used in various fields which include, for example, housings for home electric appliances, films, containers, automobile interior parts, automobile exterior parts such as a fender, a bumper, a side molding, a mud guard and a mirror cover, and general goods.
It is known that, depending upon the particular use thereof, polypropylene resins are blended with polyethylene or rubber components such as polyisobutylene, polybutadiene, or amorphous or low crystallinity ethylene-propylene copolymer (EPR) to give a polypropylene resin composition having enhanced impact resistance. Further, it is known that, to compensate lowered stiffness of a propylene resin composition having added therein a rubber component, a polypropylene resin is added with inorganic filler such as talc in combination with the rubber component (see, for example, patent document 1 recited below).
When a polypropylene resin or a polypropylene resin composition is injection molded, the resin or the resin composition is injected in a molten state, therefore, flow marks lying in the flow direction of a molten resin often appear in an injection molded article. Flow marks of injection molded articles such as automobile exterior parts are molding defects, and, when the flow marks are noticeable, they ultimately reduce the commercial value of the injection molded articles.
In recent years, lightweight vehicles exhibiting good fuel mileage and lightweight electrical appliances for universal design have been requested. For meeting these requirements, injection molded lightweight polypropylene resin foam articles are eagerly desired.
To improve impact resistance of an injection molded article of a polypropylene resin, a proposal of using a propylene-ethylene block copolymer, and a proposal of blending a polypropylene resin with polyethylene or an ethylene-propylene rubber have been made. The blends of a polypropylene resin with polyethylene or an ethylene-propylene rubber exhibit reduced whitening on bending or impacting as well as enhanced impact resistance, therefore, the blends are widely used.
However, due to the difference in melt-flowability and crystallization temperature between a polypropylene resin and polyethylene, flow marks lying in the melt-flow direction inevitably appear on the surface of an injection molded article, and hence, the appearance of the molded article is greatly damaged. Especially when a light-weight, injection molded foam article is made, the flow marks more markedly appear.
To minimize deterioration of appearance in an injection molded foam article, kneading of a polyblend is carried out, but, the deterioration of appearance cannot be minimized to the desired extent.

Prior Art Document

Patent Document

Patent document 1: JP 2006-124520 A (see claim)

Summary of the Invention

Problems to Be Solved by the Invention

In view of the foregoing, an object of the present invention is to provide a resin composition capable of giving an injection molded article having no molding defect in appearance as observed in the conventional injection molded articles.

Means for Solving the Problems

To solve the above-mentioned problems, the inventors made an extensive research and found that a composition comprising a propylene polymer resin having incorporated therein an ethylene-$\alpha$-olefin copolymer having a high melt strength and an olefin polymer resin having a low melt strength gives an injection molded article exhibiting enhanced impact strength at a low temperature and having no or minimized flow marks on the surface thereof. On the basis of this finding, the present invention has been completed.

In accordance with the present invention, there is provided a resin composition for injection molding characterized by comprising:

(I) 70 to 90 parts by weight of a propylene polymer resin having a melt flow rate (MFR) of at least 30 g/10 min. but smaller than 200 g/10 min. as measured at a temperature of 230°C according to ASTM D-1238,
(II) 5 to 25 parts by weight of an ethylene-$\alpha$-olefin copolymer having a melt strength ($MS_{160}$) of larger than 50 mN but not larger than 300 mN as measured at a temperature of 160°C, and
(III) 5 to 25 parts by weight of an olefin polymer resin having a density of at least 850 kg/m$^3$ but not larger than 930 kg/m$^3$ as measured according to JIS K6760, and a melt strength ($MS_{160}$) of smaller than 30 mN as measured at a temperature of 160°C,
wherein the sum of the three components (I), (II) and (III) is 100 parts by weight.

This invention further provides an injection molded foam article comprised of the above-mentioned resin composition for injection molding.
This invention further provides a method for producing the injection molded foam article characterized in that the above-mentioned resin composition for injection molding, and carbon dioxide and/or a carbon dioxide-generating chemical foaming agent are fed to an injection molding machine; and then,
the resin composition combined with the carbon dioxide and/or the carbon dioxide-generating chemical foaming agent is injected into a mold equipped in the injection molding machine, thereby to be expansion-molded.

Effect of the Invention

The resin composition for injection molding according to the present invention is suitable for producing an injection molded article, especially an injection molded foam article exhibiting enhanced impact strength at a low temperature and having no or minimized flow marks on the surface thereof.

Embodiments for Practicing the Invention

The invention of the present invention will be described in detail.
The resin composition for injection molding according to the present invention is characterized by comprising:

(I) 70 to 90 parts by weight of a propylene polymer resin having a melt flow rate (MFR) of at least 30 g/10 min. but smaller than 200 g/10 min. as measured at a temperature of 230°C according to ASTM D-1238,
(II) 5 to 25 parts by weight of an ethylene-$\alpha$-olefin copolymer having a melt strength ($MS_{160}$) of larger than 50 mN but not larger than 300 mN as measured at a temperature of 160°C, and
(III) 5 to 25 parts by weight of an olefin polymer resin having a density of at least 850 kg/m$^3$ but not larger than 930 kg/m$^3$ as measured according to JIS K6760, and a melt strength ($MS_{160}$) of smaller than 30 mN as measured at a temperature of 160°C,
wherein the sum of the three components (I), (II) and (III) is 100 parts by weight.

Propylene polymer resin (I)

The propylene polymer resin (I) constituting the resin composition of the present invention is preferably a propylene homopolymer or a propylene-ethylene block copolymer. The homopolymer and the copolymer may be commercially available. A preferable example of the propylene-ethylene block copolymer is comprised of a high-crystallinity polypropylene block ingredient and a rubber ingredient which is comprised of an ethylene homopolymer block and a propylene-ethylene random copolymer block. The content of the rubber ingredient in the propylene-ethylene block copolymer is preferably 5% to 25% by weight, and more preferably 5% to 20% by weight, based on the propylene-ethylene block copolymer. The high-crystallinity polypropylene block ingredient can be defined as an ingredient insoluble in n-decane at a temperature of 64°C. The rubber ingredient can be defined as an ingredient soluble in n-decane at a temperature of 64°C.

The rubber ingredient defined as an ingredient soluble in n-decane at 64°C, and the high-crystallinity polypropylene block ingredient defined as an ingredient insoluble in n-decane at 64°C can be determined as follows. 5 g of a propylene-ethylene block copolymer specimen is immersed in 200 ml of boiling n-decane for 5 hours to be thereby dissolved therein; the copolymer solution was cooled to a temperature of 64°C; the thus-deposited solid is separated by filtration using a G4 glass filter; and then the separated solid is dried and weighed. The amounts of the rubber ingredient and the high-crystallinity polypropylene block ingredient are determined as the soluble ingredient and the insoluble ingredient, respectively, by calculation from the weight of the dried solid.

The propylene-ethylene block copolymer may contain, in addition to propylene units and ethylene units, for example, units derived from other $\alpha$-olefins such as 1-butene, 1-pentene, 1-hexene, 1-heptene, 1-octene, 1-decene, 1-dodecene, 1-hexadecene and 4-methyl-1-pentene; vinyl compounds such as vinylcyclopentene, vinylcyclohexane and vinylnorbornane; vinyl esters such as vinyl acetate; and units derived from an unsaturated organic acid such as maleic anhydride, or a derivative thereof.

In view of good fluidity at injection molding, the propylene polymer resin (I) has a melt flow rate (MFR) of at least 30 g/10 min. but smaller than 200 g/10 min., and preferably, at least 30 g/10 min. but smaller than 150 g/10 min., as measured at a temperature of 230°C according to ASTM D-1238.

Ethylene-$\alpha$-olefin copolymer (II)

The ethylene-$\alpha$-olefin copolymer (II) constituting the resin composition of the present invention has a melt strength ($MS_{160}$) of larger than 50 mN but not larger than 300 mN, preferably at least 100 mN but not larger than 300 mN, as measured at a temperature of 160°C.

If the ethylene-$\alpha$-olefin copolymer (II) has an $MS_{160}$ of not larger than 50 mN, a resulting resin composition has a low melt strength and, when the resin composition is injection expansion-molded, an injection-molded foam article with a high expansion ratio is difficult to obtain. In contrast, if the ethylene-$\alpha$-olefin copolymer (II) has an $MS_{160}$ of larger than 300 mN, a resulting resin composition has poor miscibility and gives an injection-molded foam article having flow marks and poor appearance.

The melt strength ($MS_{160}$) at 160°C can be measured, for example, by the following method. A capillary viscometer (trade name "Capillograph", available from Toyo Seiki Seisaku-sho, Ltd.) having a barrel diameter of 9.55 mm is provided with a die having a length of 8 mm, a diameter of 2.095 mm and an entrance angle of 90°. Measurement is carried out at a temperature of 160°C, a piston descending speed of 10 mm/min. and a draw ratio of 47. The melt strength is determined by measuring the load (mN) required for drawing-off.

The ethylene-$\alpha$-olefin copolymer (II) preferably satisfies the following requirements (A), (B) and (C), because its resin composition for injection molding gives a foam article having a high expansion ratio:

(A) the density (d) is at least 920 kg/m$^3$ but not larger than 960 kg/m$^3$ as measured by a density-gradient tube method according to JIS K6760,
(B) the melt flow rate (MFR) is at least 1 g/10 min. but not larger than 30 g/10 min. as measured at a temperature of 190°C under a load of 2.16 kg, and
(C) the melt strength ($MS_{160}$; mN) as measured at a temperature of 160°C and the melt flow rate (MFR) as measured at a temperature of 190°C under a load of 2.16 kg satisfy the following formula (1):

$$MS_{160} > 230-200\times\log(MFR) \qquad (1)$$

An $\alpha$-olefin to be copolymerized with ethylene is preferably an $\alpha$-olefin having 3 to 8 carbon atoms, and, as specific examples thereof, there can be mentioned 1-butene, 1-pentene, 1-hexene, 1-heptene and 1-octene. The copolymerization ratio of ethylene/$\alpha$-olefin having 3 to 8 carbon atoms (mol ratio) is in the range of 1/1 to 200/1, preferably 3/1 to 100/1, and more preferably 5/1 to 50/1.

A preferable example of the ethylene-$\alpha$-olefin copolymer is an ethylene-$\alpha$-olefin copolymer having long-chain branches containing more than 20 carbon atoms, which is disclosed in, for example, JP 2001-515114 A. A typical example of the ethylene-$\alpha$-olefin copolymer having long-chain branches is a polymer having a polyethylene main chain having bonded thereto long-chain branches each containing more than 20 carbon atoms, wherein either one or both of the polyethylene main chain and the long-chain branches has $\alpha$-olefin monomer units copolymerized therein.

Other preferable examples of the ethylene-$\alpha$-olefin copolymer (II) are copolymers of ethylene with $\alpha$-olefin having 3 to 5 carbon atoms, which are produced by a polymerization process known as a process for producing ethylene-α-olefin copolymers, such as a low-pressure polymerization process or other processes, using a polymerization catalyst such as a Ziegler-Natta catalyst, a chromium-containing catalyst or a metallocene catalyst.

Especially preferable ethylene-α-olefin copolymers satisfying the above-mentioned three requirements (A), (B) and (C) can be produced by adopting the process conditions as specifically described in the examples described below. Modification can be added arbitrarily to the described process conditions.

More specifically, preferable ethylene-α-olefin copolymers can be produced by copolymerizing ethylene with an α-olefin having 3 to 8 carbon atoms in the presence of a metallocene catalyst. The metallocene catalyst is preferably prepared from a crosslinked bicyclopentadienylzirconium complex having a structure such that two cyclopentadienyl groups are crosslinked with a crosslinking group comprising a chain of at least two kinds of atoms or a chain comprising at least two atoms (the crosslinked bicyclopentadienylzirconium complex is hereinafter referred to as "ingredient (a)"); and, a crosslinked (cyclopentadienyl)-(fluorenyl)zirconium complex and/or a crosslinked (indenyl)(fluorenyl)zirconium complex (which zirconium complex is hereinafter referred to as "ingredient (b)").

As specific examples of the ingredient (a), there can be mentioned dichlorides such as 1,1,3,3-tetramethyldisiloxane--1,3-diyl-bis(cyclopentadienyl)zirconium dichloride, 1,1-dimethyl-1-silaethane-1,2-diyl-bis(cyclopentadienyl)-zirconium dichloride, propane-1,3-diyl-bis(cyclopentadienyl)-zirconium dichloride, butane-1,4-diyl-bis(cyclopentadienyl)-zirconium dichloride, cis-2-butene-1,4-diyl--bis(cyclopentadienyl)zirconium dichloride and 1,1,2,2-tetramethyldisilane-1,2-diyl-bis(cyclopentadienyl)-zirconium dichloride; and dimethyl, diethyl, dihydoxy, diphenyl and dibenzyl compounds corresponding to the above-mentioned transition-metal compounds.

As specific examples of the ingredient (b), there can be mentioned dichlorides such as diphenylmethylene-(1-cyclopentadienyl)(9-fluorenyl)zirconium dichloride, diphenylmethylene(2-trimethylsilyl-1-cyclopentadienyl)-(9-fluorenyl)zirconium dichloride, diphenylmethylene-(1-cyclopentadienyl)(2,7-dimethyl-9-fluorenyl)zirconium dichloride, diphenylmethylene(1-cyclopentadienyl)-(2,7-di-t-butyl-9-fluorenyl)zirconium dichloride, isopropylidene(1-cyclopentadienyl)(9-fluorenyl)zirconium dichloride, isopropylidene(1-cyclopentadienyl)-(2,7-di-t-butyl-9-fluorenyl)zirconium dichloride, diphenylsilanediyl(1-cyclopentadienyl)(9-fluorenyl)zirconium dichloride, dimethylsilanediyl(1-cyclopentadienyl)-(9-fluorenyl)zirconium dichloride, diphenylmethylene-(1-indenyl)(9-fluorenyl)zirconium dichloride, diphenylmethylene(2-phenyl-1-indenyl)(9-fluorenyl)zirconium dichloride and diphenylmethylene(2-phenyl-1-indenyl)-(2,7-di-t-butyl-9-fluorenyl) zirconium dichloride; and dimethyl, diethyl, dihydoxy, diphenyl and dibenzyl compounds corresponding to the above-mentioned transition-metal compounds.

As specific examples of the ingredient (a) and the ingredient (b), there can be further mentioned transition metal compounds which have a titanium atom or a hafnium atom instead of a zirconium atom in the above-recited transition metal compounds.

The proportion in amount of the ingredient (b) to the ingredient (a) is not particularly limited, but the amount of ingredient (b) is preferably in the range of 0.0001 to 100 times by mol, more preferably 0.001 to 10 times by mol, of the amount of ingredient (a).

The metallocene catalyst prepared using the ingredient (a) and the ingredient (b) includes, for example, a catalyst comprised of ingredient (a), ingredient (b) and an organoaluminum compound (hereinafter referred to as "ingredient (c)"); a catalyst comprised of ingredient (a), ingredient (b) and an aluminoxane (hereinafter referred to as "ingredient (d)"); a catalyst comprised of ingredient (a), ingredient (b), ingredient (c) and ingredient (d); a catalyst comprised of ingredient (a), ingredient (b), and at least one salt selected from the group consisting of a protonic acid salt (hereinafter referred to as "ingredient (e)"), a Lewis acid salt (hereinafter referred to as "ingredient (f)") and a metal salt (hereinafter referred to as "ingredient (g)"); a catalyst comprised of ingredient (a), ingredient (b) and at least one salt selected from the group consisting of ingredient (e), ingredient (f) and ingredient (g), and further ingredient (c); a catalyst comprised of ingredient (a), ingredient (b), ingredient (d) and an inorganic oxide (hereinafter referred to as "ingredient (h)"); a catalyst comprised of ingredient (a), ingredient (b) and ingredient (h), and at least one salt selected from the group consisting of ingredient (e), ingredient (f) and ingredient (g); a catalyst comprised of ingredient (a), ingredient (b), ingredient (c) and ingredient (h), and at least one salt selected from the group consisting of ingredient (e), ingredient (f) and ingredient (g); a catalyst comprised of ingredient (a), ingredient (b), a clay mineral (hereinafter referred to as "ingredient (i)) and ingredient (c); and a catalyst comprised of ingredient (a), ingredient (b) and clay mineral which has been modified with an organic compound (hereinafter referred to as "ingredient (j)).

Of these, a catalyst comprised of ingredient (a), ingredient (b) and ingredient (j) is preferable.

As the clay mineral which can be used as the ingredient (i) and the ingredient (j), finely divided particles predominantly comprised of microcrystalline silicate salts are mentioned. Most clay minerals have a layer structure composed of a plurality of layers having negative charges of various valences among the layers. This layer structure is greatly different from a three-dimensional structure of a metal oxide such as silica and alumina.

On the basis of valence of negative charges, the clay minerals with the layer structure are classified into a group having a negative charge valence of approximately zero as its chemical formula such as pyrophylite, kaolinite, dickite and a talc group; a smectite group having a negative charge valence as its chemical formula in the range of approximately 0.25 to approximately 0.6; a vermiculite group having a negative charge valence as its chemical formula of approximately 0.6 to 0.9; a mica group having a negative charge valence as its chemical formula of approximately 1; and a brittle mica group having a negative charge valence as its chemical formula of approximately 2.

Each group of the clay mineral includes various clay minerals. For example, a clay mineral of smectite group includes, for example, montmorillonite, beidellite, saponite and hectorite. The clay minerals may be used as a combination of at least two kinds thereof.

The clay mineral which has been modified with an organic compound in the ingredient (j) refers to that wherein the clay mineral has been modified so that an organic ion has been introduced to form an ion composite among layers in the layer structure of the clay mineral. As examples of the organic compound used for modification, there can be mentioned N,N-dimethyl-n-octadecylamine hydrochloride, N,N-dimethyl-n-eicosylamine hydrochloride, N,N-dimethyl--n-docosylamine hydrochloride, N,N-dimethyl-oleylamine hydrochloride, N,N-dimethyl-behenylamine hydrochloride, N-methyl-bis(n-octadecyl)amine hydrochloride, N-methyl--bis(n-eicosyl)amine hydrochloride, N-methyl-dioleylamine hydrochloride, N-methyl-dibehenylamine hydrochloride and N,N-dimethylaniline hydrochloride.

The catalyst comprised of ingredient (a), ingredient (b) and ingredient (j) can be prepared by contacting ingredient (a), ingredient (b) and ingredient (j) with each other in an organic solvent. As specific examples of the preparation method, there can be mentioned a method of contacting ingredient (a) with ingredient (j) and then adding ingredient (b) to the contact product; a method of contacting ingredient (b) with ingredient (j) and then adding ingredient (a) to the contact product; a method of contacting ingredient (a) with ingredient (b) and then adding ingredient (j) to the contact product; and, a method of contacting ingredient (a) with ingredient (b) and then adding the contact product to ingredient (j).

The organic solvent used in the contact reaction includes, for example, aliphatic hydrocarbons such as butane, pentane, hexane, heptane, octane, nonane, decane, cyclopentane and cyclohexane; aromatic hydrocarbons such as benzene, toluene and xylene; ethers such as ethyl ether and n-butyl ether; halogenated hydrocarbons such as methylene chloride and chloroform; 1,4-dioxane, acetonitrile and tetetrahydrofuran.

The contact reaction is carried out preferably at a temperature in the range of 0°C to 200°C.

The amounts of ingredients (a) and (j) are such that the amount of ingredient (a) is in the range of 0.0001 to 100 mmol, preferably 0.001 to 10 mmol, per 1 g of ingredient (j).

The thus-prepared contact reaction product of ingredient (a), ingredient (b) and ingredient (j) may be used either as it is without washing, or after washing. When ingredient (a) or ingredient (b) is a dihalide, it is preferable to further add ingredient (c). Further ingredient (c) can be added for the purpose of removing impurities from ingredient (j), a polymerization solvent and the olefin monomer.

The polymerization reaction for the production of the ethylene-$\alpha$-olefin copolymer (II) constituting the resin composition of the present invention is preferably carried out at a polymerization temperature in the range of -100°C to 120°C. In view of the productivity, the polymerization temperature is more preferably 20°C to 120°C, and especially preferably 60°C to 120°C.

The polymerization time is preferably in the range of 10 seconds to 20 hours. The polymerization pressure is preferably in the range of normal pressure to 300 MPa.

When ethylene is copolymerized with an $\alpha$-olefin having 3 to 8 carbon atoms, the feed ratio of these monomers are chosen so that the mol ratio of ethylene to an $\alpha$-olefin having 3 to 8 carbon atoms is in the range of 1/1 to 200/1, preferably 3/1 to 100/1 and more preferably 5/1 to 50/1.

The molecular weight of the copolymer can be controlled by using hydrogen or other molecular weight modifier at polymerization. The polymerization can be carried out by any of batchwise, semi-continuous and continuous procedures. The polymerization can be carried out by a multi-stage polymerization procedure including at least two stages conducted under different conditions.

After completion of the polymerization, the ethylene copolymer can be separated from a polymerization liquid medium and dried by the conventional procedure for recovery.

The polymerization can be carried out in any state of slurry, solution and gas states. Especially when the polymerization is carried out in a slurry state, a powdery ethylene copolymer comprised of uniform finely divided particles can be produced stably and with good efficiency.

A liquid medium used in the polymerization is not particularly limited and conventional organic solvents can be used. As specific examples of the organic solvents, there can be mentioned benzene, toluene, xylene, propane, isobutane, pentane, hexane, heptane, cyclohexane and gasoline. The $\alpha$-olefin comonomers such as propylene, 1-butene, 1-hexene and 1-octene can also be used as the organic solvent.

Olefin polymer resin (III)

The olefin polymer resin (III) used in the present invention has a density of at least 850 kg/m$^3$ but not larger than 930 kg/m$^3$ as measured according to JIS K6760, and a melt strength (MS$_{160}$) of smaller than 30 mN as measured at a temperature of 160°C,

The olefin polymer resin (III) includes a polyolefin resin made by a high-pressure radical polymerization process, rubber comprising alkenyl aromatic compound units, and an ethylene-α-olefin copolymer. These polymer resins may be used either alone or as a combination of at least two thereof.

If the olefin polymer resin (III) used in the present invention has a density of smaller than 850 kg/m$^3$ as measured according to JIS K6760, the injection molded article exhibits undesirable stickiness and has poor appearance. In contrast, if the olefin polymer resin (III) has a density of larger than 930 kg/m$^3$, adherence between a mold and the polymer resin is too low at injection molding, and the injection molded article has poor appearance. If the olefin polymer resin (III) has a melt strength (MS$_{160}$) of at least 30 mN, the polymer resin exhibits too large melt elasticity at injection molding, and the precision of reproducibility of a mold becomes poor.

A polyolefin resin made by a high-pressure radical polymerization process, used as the olefin polymer resin (III), preferably includes low-density polyethylene made by a high-pressure radical polymerization process. The low-density polyethylene is generally referred to high-pressure low-density polyethylene. Especially preferable high-pressure low-density polyethylene has a melt flow rate (MFR) of at least 70 g/10 min but smaller than 300 g/10 min. as measured at a temperature of 190°C according to ASTM D-1238, because it gives an injection molded foam article having a high expansion ratio. Further the high-pressure low-density polyethylene preferably has a density in the range of 910 to 925 kg/m$^3$.

An ethylene-α-olefin copolymer used as the olefin polymer resin (III) includes an ethylene-α-olefin copolymer and an ethylene-α-olefin-non-conjugated diene copolymer.

The α-olefin used for the ethylene-α-olefin copolymer and the ethylene-α-olefin-non-conjugated diene copolymer includes, for example, α-olefins having 4 to 20 carbon atoms, such as 1-butene, isobutene, 1-pentene, 2-methyl-1-butene, 3-methyl-1-butene, 1-hexene, 2-methyl-1-pentene, 3-methyl-1-pentene, 4-methyl-1-pentene, 1-octene, 1-nonene, 1-decene, 1-undecene and 1-dodecene. These α-olefins may be used either alone or as a combination of at least two thereof. Of these, at least one selected from 1-butene, 1-hexene and 1-octene is preferably used.

The non-conjugated diene for the ethylene-α-olefin-non-conjugated diene copolymer includes, for example, chain-like non-conjugated dienes such as 1,4-hexadiene, 1,6-octadiene, 2-methyl-1,5-hexadiene, 6-methyl-1,5-heptadiene and 7-methyl-1,6-octadiene; and cyclic non-conjugated dienes such as cyclohexadiene, dicyclopentadiene, methyltetrahydroindene, 5-vinylnorbornene, 5-ethylidene-2-norbornene, 5-methylene-2-norbornene, 5-isopropylidene-2-norbornene and 6-chloromethyl-5-isopropenyl-2-norbornene; and trienes such as 2,3-diisopropylidene-5-norbornene, 2-ethylidene-3-isopropylidene-5-norbornene, 2-propenyl-2,2-norbornadiene, 1,3,7-octatriene and 1,4,9-decatriene. Of these, 5-ethylidene-2-norbornene and dicyclopentadiene are preferable.

The ratio by mol of ethylene/α-olefin in the ethylene-α-olefin copolymer is in the range of 1/0.1 to 1/10.

The ethylene-α-olefin copolymer preferably has a density of at least 850 kg/m$^3$ but not larger than 910 kg/m$^3$, and more preferably at least 870 kg/m$^3$ but not larger than 905 kg/m$^3$, because the copolymer exhibits good compatibility with the propylene polymer resin (I) and gives an injection molded foam article having high impact resistance.

The ethylene-α-olefin copolymer preferably has a melt flow rate (MFR) in the range of 5 to 50 g/10 min., and more preferably 10 to 40 g/10 min., because the copolymer exhibits good processability at molding and gives an injection molded foam article having high impact resistance.

The above-mentioned ethylene-α-olefin copolymer is produced by the conventional polymerization process using a known polymerization catalyst. The known polymerization catalyst includes Ziegler-Natta catalysts comprised of a vanadium compound, an organic aluminum compound and a halogenated ester compound; and a metallocene catalyst which is a combination of a metallocene compound comprising a titanium, zirconium or hafnium atom having coordinated therewith at least one group having a cyclopentadienyl anion skeletal structure, with alumoxane or a boron compound.

The conventional polymerization process includes, for example, a polymerization process for copolymerizing ethylene with α-olefin in an inert organic liquid medium, and a polymerization process for copolymerizing ethylene with α-olefin in an atmosphere comprising these monomers without use of a liquid medium.

The above-mentioned alkenyl aromatic compound units-containing rubber is produced by bonding an alkenyl aromatic compound to an olefin copolymer or a conjugated diene polymer rubber by a copolymerization procedure or other reaction procedure. The alkenyl aromatic compound units-containing rubber includes, for example, a block copolymer comprised of a vinyl aromatic compound polymer block and a conjugated diene polymer block, and a block copolymer prepared by hydrogenating unsaturated double bonds in the conjugated diene polymer block portion of said vinyl aromatic compound polymer block/conjugated diene polymer block copolymer. The block copolymer prepared by hydrogenating unsaturated double bonds in the conjugated diene polymer block portion of said block copolymer is preferable. Especially preferable is a block copolymer prepared by hydrogenating at least 80%, more preferably at least 85%, of the unsaturated double bonds in the conjugated diene polymer block portion of said vinyl aromatic compound polymer block/conjugated diene polymer block copolymer.

As specific examples of the alkenyl aromatic compound units contained in the rubber, there can be mentioned units derived from alkylstyrenes such as p-methylstyrene, m-methylstyrene, o-methylstyrene, p-ethylstyrene, m-ethylstyrene, o-ethylstyrene, 2,4-dimethylstyrene, 2,5-dimethylstyrene, 3,4-dimethylstyrene, 3,5-dimethylstyrene, 3-methyl-5-ethylstyrene, p-tert-butylstyrene and p-sec-butylstyrene; alkenylbenzenes such as styrene, 2-phenyl-1-propylene and 2-phenyl-1-butene; bisalkenylbenzenes such as divinylbenzene; and vinylnaphthalenes such as 1-vinylnaphthalene. Of these, styrene is widely used.

As specific examples of the alkenyl aromatic compound units-containing rubber, there can be mentioned block copolymers such as styrene-ethylene-butene-styrene rubber (SEBS), styrene-ethylene-propylene-styrene rubber (SEPS), styrene-butadiene rubber (SBR), styrene-butadiene-styrene rubber (SBS), styrene-isoprene-styrene rubber (SIS), and block copolymers prepared by hydrogenating the rubber ingredients of the above-recited block copolymers. Of these, styrene-ethylene-butene-styrene rubber (SEBS) is preferablein view of its good compatibility with modified propylene polymer resins.

The alkenyl aromatic compound units-containing rubber can be produced, for example, by a process wherein an alkenyl aromatic compound is bonded to an olefin copolymer or a conjugated diene polymer rubber by a copolymerization procedure or other reaction procedure.

The alkenyl aromatic compound units-containing rubber preferably has a MFR in the range of 1 to 15 g/10 min., more preferably 2 to 13 g/10 min., as measured at 230°C. When the MFR is within this range, the rubber tends to exhibit enhanced compatibility with modified propylene polymer resins.

Resin composition for injection molding

The resin composition for injection molding according to the present invention comprises:

(I) 70 to 90 parts by weight of a propylene polymer resin having a MFR of at least 30 g/10 min. but smaller than 200 g/10 min. as measured at a temperature of 230°C according to ASTM D-1238,
(II) 5 to 25 parts by weight of an ethylene-$\alpha$-olefin copolymer having a melt strength ($MS_{160}$) of larger than 50 mN but not larger than 300 mN as measured at a temperature of 160°C, and
(III) 5 to 25 parts by weight of an olefin polymer resin having a density of at least 850 kg/m$^3$ but not larger than 930 kg/m$^3$ as measured according to JIS K6760, and a melt strength ($MS_{160}$) of smaller than 30 mN as measured at a temperature of 160°C,
wherein the sum of the three components (I), (II) and (III) is 100 parts by weight.

If the amount of the propylene polymer resin (I) is smaller than 70 parts by weight, the amount of ethylene-$\alpha$-olefin copolymer (II) is larger than 25 parts by weight, or the amount of olefin polymer resin (III) is larger than 25 parts by weight, the resin composition has poor heat resistance. If the amount of the propylene polymer resin (I) is larger than 90 parts by weight, or the amount of ethylene-$\alpha$-olefin copolymer (II) is smaller than 5 parts by weight, the resin composition exhibits poor foaming property at the step of injection expanding molding. If the amount of the olefin polymer resin (III) is smaller than 5 parts by weight, the resin composition exhibits poor processability and tends to give a foam article having poor impact strength at a low temperature and having flow marks on the surface thereof.

The resin composition for injection molding according to the present invention preferably has a MFR of at least 30 g/10 min. but smaller than 200 g/10 min. as measured at a temperature of 230°C according to ASTM D-1238, because the resin composition exhibits more enhanced processability and gives an injection-molded article having no or minimized flow mark.

The resin composition for injection molding according to the present invention preferably has a melt strength ($MS_{190}$) in the range of 2 mN to 30 mN as measured at a temperature of 190°C and a winding rate of 10 m/min., because the resin composition exhibits more enhanced processability and gives an injection-molded article having no or minimized flow mark.

According to the need, various additives can be incorporated in the resin composition of the present invention provided that the gist of the present invention can be kept. The additives include, for example, a stabilizer, a lubricant, a fire retardant, a dispersant, a filler, a crosslinking agent, a ultraviolet stabilizer, an antioxidant and a colorant. Other thermoplastic resins can be incorporated in the resin composition. Such thermoplastic resins include, for example, high-density polyethylene, straight chain low-density polyethylene (L-LDPE), low-density polyethylene, polypropylene resins, poly-1-butene, poly-4-methyl-1-pentene, an ethylene-vinyl acetate copolymer, an ethylene-vinyl alcohol copolymer, polystyrene, and maleic anhydride-grafted copolymers made from these polymers.

Injection molded foam article and process for producing the foam article

The process for producing the injection molded foam article from the resin composition for injection molding according to the present invention is not particularly limited. Conventional injection molding foaming processes can be adopted. Known foaming agents can be used in combination with the resin composition for injection molding. The foaming agents may be any of a solvent-type foaming agent, a decomposable foaming agent and a gaseous foaming agent.

The solvent-type foaming agent or the gaseous foaming agent are introduced into a cylinder of an extruder where the foaming agent is absorbed by or dissolved in a molten resin composition, and evaporated to form bubbles within the cylinder. As specific examples of the solvent-type foaming agent and the gaseous foaming agent, there can be mentioned carbon dioxide gas; low-boiling aliphatic hydrocarbons such as propane, butane, neopentane, heptanes, isohexane, isoheptane and heptane; and low-boiling fluorine-containing hydrocarbon gas represented by freon gas.

The decomposable foaming agent is incorporated in the resin composition prior to the injection molding, and the foaming agent-incorporated resin composition is fed into a cylinder of an extruder where the foaming agent is decomposed at a predetermined temperature to generate gas such as, for example, carbon dioxide gas or nitrogen gas within the cylinder. The decomposable foaming agent may be either inorganic or organic foaming agent. A gasification promoter such as an organic acid can be used in combination with the foaming agent.

As specific examples of the decomposable foaming agent, the following compounds can be mentioned.

(a) Inorganic foaming agents such as sodium bicarbonate, sodium carbonate, ammonium bicarbonate, ammonium carbonate, ammonium nitrite, citric acid and sodium citrate.

(b) Organic foaming agents including N-nitroso compounds such as N,N'-dinitrosoterephthalamide and N,N'-dinitrosopentamethylenetetramine; azo compounds such as azodicarbonamide, azobisisobutyronitrile, azocyclohexylnitrile, azodiaminobenzene and barium azodicarboxylate; sulfonylhydrazide compounds such as benzenesulfonylhydrazide, toluenesulfonylhydrazide, p,p'-oxybis(benzenesulfenylhydrazide) and diphenylsulfone--3,3'-disulfonylhydrazide; and azide compounds such as calcium azide, 4,4'-diphenyldisulfonylazide and p-toluenesulfonylazide.

Especially when an injection molded foam article is produced, carbon dioxide is preferably used as a foaming agent. The carbon dioxide used includes carbon dioxide generated from a carbon dioxide-generating chemical foaming agent as well as carbon dioxide itself.

In the process for producing the injection molded foam article, the resin composition for injection expansion molding, and carbon dioxide and/or a carbon dioxide-generating chemical foaming agent are fed to an injection molding machine where the resin composition combined with carbon dioxide and/or the chemical foaming agent is injected into a mold to be thereby expanded. The resin composition for injection expanding molding and carbon dioxide and/or a carbon dioxide-generating chemical foaming agent are previously be mixed together, and fed, as a mixture thereof, to the injection molding machine. Alternatively the resin composition for injection expanding molding is fed to the injection molding machine, and then carbon dioxide and/or a carbon dioxide-generating chemical foaming agent are added into the resin composition.

The carbon dioxide-generating chemical foaming agent is preferably mixed with the resin composition prior to feeding to a molding machine where the chemical foaming agent is decomposed to generate carbon dioxide gas. Such carbon dioxide-generating chemical foaming agent includes, for example, inorganic chemical foaming agents such as sodium bicarbonate, sodium hydrogencarbonate and ammonium carbonate, and organic chemical foaming agents such as azodicarbonamide and N,N'-dinitrosopentamethylenetetramine.

Carbon dioxide used includes supercritical carbon dioxide as well as carbon dioxide gas. Carbon dioxide is fed, as gas or supercritical fluid, and dispersed or dissolved in a molten resin composition within a cylinder of an injection molding machine. After the resin composition is injected into a mold, the function of carbon dioxide as a foaming agent is manifested upon release of pressure.

When an injection molded foam article is produced, a foaming aid and/or a nucleating agent can be used to produce stable, and fine and uniform bubbles, according to the need. The foaming aid includes, for example, an organic acid such as citric acid; and the nucleating agent includes, for example, finely divided inorganic particles such as fine particles of talc and lithium carbonate.

The inorganic chemical foaming agent is preferably used as a master batch of the resin composition containing 10% to 50% by weight of the inorganic chemical foaming agent in view of handling property, storage stability and dispersibility in the resin composition.

When an injection expanding molding using a carbon dioxide-generating chemical foaming agent is conducted, the amount of the foaming agent can be appropriately determined depending upon the particular expansion ratio of a molded foam article and the temperature of resin composition at molding. The amount of the carbon dioxide-generating chemical foaming agent is preferably in the range of 0.5 to 20 parts by weight, more preferably 1 to 10 parts by weight, based on 100 parts by weight of the resin composition for injection expanding molding in order to produce economically an injection molded foam article having an expansion ratio of at least two and fine and uniform bubbles.

A process for the production of the injection molded foam article will be specifically described. The production of the injection molded foam article can be conducted by the known conventional process. The production conditions can be appropriately determined depending upon the MFR of the resin composition for injection expanding molding, the kind of a foaming agent, the type of an injection molding machine, and the shape of a mold. The injection expanding molding of the resin composition of the present invention is usually conducted under the following conditions. Resin temperature: 170-250°C, mold temperature: 10-100°C, molding cycle: 1 to 60 minutes, injection speed: 10-300 mm/sec., and injection pressure: 10-200 MPa.

A core back injection expanding molding is beneficially adopted for forming bubbles within a mold wherein the molten resin composition is injected into the mold comprised of a fixed mold and a mold movable forward and backward, and, the expansion of the molten resin composition is effected, while the movable mold is moved backward. A foam article produced by the core back injection expanding molding has a multi-layer structure comprised of a non-foam surface layer and an interior foam layer with uniform and fine bubbles, and is lightweight and has enhanced impact resistance. The backward movement of the movable mold can be conducted in either one stage or two or more stages, and the moving speed can be appropriately varied.

A counter-pressure method can be preferably adopted wherein the resin composition for injection expanding molding is introduced into a mold while the inside of mold is pressed by previously blowing inert gas therein. The injection molded foam article produced by the counter-pressure method has a minimized mold defect called swirl marks.

The injection molded foam article produced from the resin composition of the present invention preferably has an expansion ratio in the range of 1.8 to 10 times, more preferably 2 to 4 times in view of well balanced lightweight and rigidity. The foam layer preferably has bubbles with an average diameter of not larger than 200 $\mu$m. The foam article preferably has a multi-layer structure comprising a non-foam surface layer on the foam layer because of adequate rigidity. The thickness of the non-foam surface layer is preferably not larger than 300 $\mu$m, more preferably not larger than 100 $\mu$m.

Examples

The invention will be described by the following examples and comparative examples that by no means limit the scope of the invention.

(i) Properties of polymers, polymer resin compositions and molded articles were measured and evaluated by the following methods.

(i)-1 Polymer density (d)

Density (d) of the ethylene-$\alpha$-olefin copolymer (II) and density (d) of an ethylene-$\alpha$-olefin copolymer as one example of the olefin polymer resin (III) were measured by a density gradient tube method according to JIS K6760 (1995).

(i)-2 Melt strength ($MS_{160}$, $MS_{190}$)

Melt strength of the ethylene-$\alpha$-olefin copolymer (II) and melt strength of the resin composition were measured as follows.
A capillary viscometer (trade name "Capillograph", available from Toyo Seiki Seisaku-sho, Ltd.) having a barrel diameter of 9.55 mm provided with a die having a length of 8 mm, a diameter of 2.095 mm and an entrance angle of 90° was used. Measurement of $MS_{160}$ and $MS_{190}$ was carried out at temperatures of 160°C and 190°C, respectively. Piston descending rate was 10 mm/min., winding rate was 10 m/min., and draw ratio was 47. The melt strength ($MS_{160}$, $MS_{190}$) was determined by measuring the load (mN) required for drawing-off at a maximum drawing ratio without breaking.

(i) -3 $M_w/M_n$

$M_w/M_n$ of a polyethylene macromonomer was calculated from a weight average molecular weight ($M_w$) and a number average molecular weight ($M_n$), which were measured by gel permeation chromatography (GPC) and expressed in terms of that of standard polyethylene.

(i)-4 Appearance (appearance of non-foam article)

A resin composition was injection molded by an injection molding machine at a molding temperature of 210°C and a mold temperature of 40°C to give a disc specimen having a diameter of 10 cm and a thickness of 2 mm.
The appearance of the disc specimen was evaluated by visual inspection of flow mark surface defects. The evaluation results were expressed by the following four ratings.
A: Flow marks did not appear or very slightly appeared.
B: Flow marks slightly appeared.
C: Flow marks fairly appeared.
D: Flow marks conspicuously appeared.

(i)-5 Appearance (appearance of foam article)

100 parts by weight of a resin composition for injection molding and 0.9 part by weight of a foaming agent (sodium hydrogencarbonate, "Cellborn" available from Eiwa Chemical Ind. Co., Ltd.) were kneaded together by a kneader at a temperature of 200°C. The kneaded mixture was injection molded at a molding temperature of 210°C to give a disc specimen having a diameter of 10 cm and a thickness of 2 mm. The appearance of the disc specimen was evaluated by visual inspection of flow mark surface defects. The evaluation results were expressed by the following four ratings.
A: Flow marks did not appear or very slightly appeared.
B: Flow marks slightly appeared.
C: Flow marks fairly appeared.
D: Flow marks conspicuously appeared.

(ii) Propylene polymer resin (I)

As the propylene polymer resin (I), the following copolymers were used.
Trade name, Sumitomo Noblene #AX674, available from Sumitomo Chemical Co., Ltd., propylene-ethylene block copolymer, MFR: 65 g/10 min.
Trade name, Sumitomo Noblene #AX574, available from Sumitomo Chemical Co., Ltd. , propylene-ethylene block copolymer, MFR: 45 g/10 min.
Trade name, Sumitomo Noblene #AX564, available from Sumitomo Chemical Co., Ltd., propylene-ethylene block copolymer, MFR: 28 g/10 min.

(iii) Ethylene-$\alpha$-olefin copolymer (II)

As the ethylene-$\alpha$-olefin copolymer (II), those which were prepared in the following production examples 1 through 11 were used.

Production Example 1

(1) Preparation of Clay Mineral Treated with Organic Compound (Organic-Modified Clay)

A 10 L (liters) reactor was charged with 3 L of industrial alcohol ("Ekinen F-3" available from Japan Alcohol Trading Co., Ltd.) and 3L of distilled water, and then, 100 mL (milli-liter) of concentrated aqueous hydrochloric acid and 585 g (1.1 mol) of N-methyl-dioleylamine ("Armeen M20" available from Lion Corporation) were added. The mixed liquid was heated to 45°C and 1 kg of synthetic hectorite ("Laponite RDS" available from Rockwood Additives Ltd.) was dispersed therein. The obtained slurry was heated to 60°C and stirred at that temperature for one hour. Then, the slurry was filtered. The solid was washed with 50 L of water twice at 60°C, and then, dried at 85°C for 12 hours in a drier to give 1.5 kg of organic-modified clay. The organic-modified clay was pulverized into a median particle diameter of 10.5 $\mu$m by a jet mill.

(2) Preparation of Catalyst Slurry

500 g of the organic-modified clay, prepared in (1) mentioned above, was suspended in 1.7 L of hexane, and then, 6.97 g (20.0 mmol) of dimethylsilanediyl-bis(cyclopentadienyl)-zirconium dichloride, 2.33 g (3.53 mmol) of diphenylmethylene(1-cyclopentadienyl)(2,7-di-tert-butyl-9-fluorenyl) zirconium dichloride, and 2.8 L (2 mol) of a hexane solution (0.714 M) of triisobutylaluminum were added to the organic-modified clay suspension. The thus-obtained slurry was stirred at room temperature for 6 hours. The slurry was left to stand and a supernatant was removed therefrom. The solid was washed twice with hexane, and finally hexane was added to give a catalyst slurry with a concentration of 100 g/L.

(3) Production of Ethylene Copolymer Resin

A polymerization vessel having an inner volume of 540 L was continuously charged with 145 kg/hour of hexane, 33.0 kg/hour of ethylene, 1.0 kg/hour of 1-butene and 19 NL/hour of hydrogen, while the above-mentioned catalyst slurry was continuously fed in an amount such that a copolymer was produced at a rate of 30 kg/hour. Polymerization was continuously conducted while the total pressure was maintained at 3,000 kPa, and the content was maintained at 85°C. The thus-obtained copolymer slurry was continuously taken from the polymerization vessel, and unreacted hydrogen, ethylene and butene-1 were removed therefrom. The copolymer was collected by filtration and dried to give an ethylene copolymer powder. The ethylene copolymer powder was melt-kneaded and pelletized by using a single-screw extruder with a 50 mm diameter, maintained at 200°C.

The obtained ethylene copolymer resin pellet had a density of 950 kg/m$^3$, a MFR of 4.0 g/10 min, and a melt strength (MS$_{160}$) of 120 mN as measured at 160°C.

Production Example 2

(1) Preparation of Organic-Modified Clay

A 10 L reactor was charged with 3 L of industrial alcohol ("Ekinen F-3" available from Japan Alcohol Trading Co., Ltd.) and 3L of distilled water, and then, 100 mL (milli-liter) of concentrated aqueous hydrochloric acid and 330 g (1.1 mol) of N-dimethyl-octadecylamine ("Armeen DM18D" available from Lion Corporation) were added. The mixed liquid was heated to 45°C and 1 kg of synthetic hectorite ("Laponite RDS" available from Rockwood Additives Ltd.) was dispersed therein. The obtained slurry was heated to 60°C and stirred at that temperature for one hour. Then, the slurry was filtered. The solid was washed with 50 L of water twice at 60°C, and then, dried at 85°C for 12 hours in a drier to give 1.3 kg of organic-modified clay. The organic-modified clay was pulverized into a median particle diameter of 10.5 $\mu$m by a jet mill.

(2) Preparation of Catalyst for Synthesis of Macromonomer

500 g of the organic-modified clay, prepared in (1) mentioned above, was suspended in 1.7 L of hexane, and then, 6.97 g (20.0 mmol) of dimethylsilanediyl-bis(cyclopentadienyl) zirconium dichloride, and 2.8 L (2 mol) of a hexane solution (0. 714 M) of triisobutylaluminum were added to the organic-modified clay suspension. The thus-obtained slurry was stirred at room temperature for 6 hours. The slurry was left to stand and a supernatant was removed therefrom. The solid was washed twice with hexane, and finally hexane was added to give a catalyst slurry with a concentration of 100 g/L.

(3) Synthesis of Macromonomer

A polymerization vessel having an inner volume of 370 L was continuously charged with 80 kg/hour of hexane, 33 kg/hour of ethylene and 0.3 kg/hour of 1-butene, while the above-mentioned catalyst slurry, prepared in (2) mentioned above, was continuously fed in an amount such that a macromonomer was produced at a rate of 30 kg/hour. Polymerization was continuously conducted while the content was maintained at 85°C.

The thus-obtained macromonomer slurry was continuously taken from the polymerization vessel, and unreacted hydrogen and ethylene were removed therefrom. The macromonomer was transferred to a second polymerization vessel having an inner volume of 540 L. The macromonomer was taken from the second polymerization vessel, and analyzed. The obtained macromonomer had a M$_n$ of 9, 600 and a M$_w$/M$_n$ of 2.5. Analysis of terminal structure of the macromonomer by NMR revealed that a terminal vinyl content (Z) was 0.35 mol per 1 mol of the macromonomer.

(4) Preparation of Catalyst for Production of Polyethylene Resin

2.8 L (2 mol) of a hexane solution (0.714 M) of triisobutylaluminum and 670 g (1.0 mol) of diphenylmethylene (1-cyclopentadienyl)(2,7-di-tert-butyl-9-fluorenyl) zirconium dichloride were added in 21.2 L of hexane, and the mixed liquid was stirred at room temperature for one hour to give a catalyst solution.

(5) Production of Polyethylene Resin

The second polymerization vessel having an inner volume of 540 L, to which the macromonomer synthesized in (3) mentioned above had been transferred, was continuously charged with 2.5 kg/hour of ethylene and 20 NL/hour of hydrogen, while the catalyst solution prepared in (4) mentioned above was continuously fed in an amount such that polyethylene resin was produced at a rate of 32 kg/hour. Polymerization temperature was maintained at 85°C.

The thus-obtained polyethylene resin slurry was continuously taken from the polymerization vessel, and unreacted hydrogen and ethylene were removed therefrom. The polyethylene resin was collected by filtration and dried to give a polyethylene resin powder. The polyethylene resin powder was melt-kneaded and pelletized by using a single-screw extruder with a 50 mm diameter, maintained at 200°C.

The obtained polyethylene resin pellet had a density of 955 kg/m$^3$, a MFR of 4.0 g/10 min, and a melt strength (MS$_{160}$) of 150 mN as measured at 160°C.

Production Example 3

(1) Production of Ethylene Copolymer Resin By the same procedures as mentioned in Production Example 1 [(3) Production of Ethylene Copolymer Resin], an ethylene copolymer resin was produced except that the amount of hydrogen fed was 12 NL/hour instead of 19 NL/hour.
The obtained ethylene copolymer resin pellet had a density of 950 kg/m$^3$, a MFR of 2.0 g/10 min, and a melt strength (MS$_{160}$) of 170 mN as measured at 160°C.

Production Example 4

(1) Preparation of Organic-Modified Clay

A 10 L reactor was charged with 3 L of industrial alcohol ("Ekinen F-3" available from Japan Alcohol Trading Co., Ltd.) and 3L of distilled water, and then, 100 mL of concentrated aqueous hydrochloric acid and 330 g (1.1 mol) of N-dimethyl-octadecylamine ("Armeen DM18D" available from Lion Corporation) were added. The mixed liquid was heated to 45°C and 1 kg of synthetic hectorite ("Laponite RDS" available from Rockwood Additives Ltd.) was dispersed therein. The obtained slurry was heated to 60°C and stirred at that temperature for one hour. Then, the slurry was filtered. The solid was washed with 5 L of water twice at 60°C, and then, dried at 85°C for 12 hours in a drier to give 1.3 kg of organic-modified clay. The organic-modified clay was pulverized into a median particle diameter of 10.5 $\mu$m by a jet mill.

(2) Preparation of Catalyst for Synthesis of Macromonomer

500 g of the organic-modified clay, prepared in (1) mentioned above, was suspended in 1.7 L of hexane, and then, 6.97 g (20.0 mmol) of dimethylsilanediyl-bis(cyclopentadienyl) zirconium dichloride, and 2.8 L (2 mol) of a hexane solution (0.714 M) of triisobutylaluminum were added to the organic-modified clay suspension. The thus-obtained slurry was stirred at room temperature for 6 hours. The slurry was left to stand and a supernatant was removed therefrom. The solid was washed twice with hexane, and finally hexane was added to give a catalyst slurry with a concentration of 100 g/L.

(3) Synthesis of Macromonomer

A polymerization vessel having an inner volume of 370 L was continuously charged with 80 kg/hour of hexane, 33 kg/hour of ethylene, 0.6 kg/hour of 1-butene, while triisobutylaluminum was continuously fed in an amount such that the concentration of triisobutylaluminum in a mixed liquid was maintained at 0.19 mmol/kg of hexane, and while the catalyst slurry for synthesis of macromonomer, prepared in (2) mentioned above, was continuously fed in an amount such that a macromonomer was produced at a rate of 30 kg/hour. Polymerization was continuously conducted while the content was maintained at 85°C.
The thus-obtained macromonomer slurry was continuously taken from the polymerization vessel, and unreacted hydrogen, ethylene and butane-1 were removed therefrom. The macromonomer was transferred to a second polymerization vessel having an inner volume of 540 L. The macromonomer was taken from the second polymerization vessel, and analyzed.
The obtained macromonomer had a M$_n$ of 9,200 and a M$_w$/M$_n$ of 2.5. Analysis of terminal structure of the macromonomer by NMR revealed that a terminal vinyl content (Z) was 0.37 mol per 1 mol of the macromonomer.

(4) Preparation of Catalyst for Production of Polyethylene Resin

2.8 L (2 mol) of a hexane solution (0.714 M) of triisobutylaluminum and 670 g (1.0 mol) of diphenylmethylene (1-cyclopentadienyl)(2,7-di-tert-butyl-9-fluorenyl) zirconium dichloride were added in 21.2 L of hexane, and the mixed liquid was stirred at room temperature for one hour to give a catalyst solution.

(5) Production of Polyethylene Resin

The second polymerization vessel having an inner volume of 540 L, to which the macromonomer synthesized in (3) mentioned above had been transferred, was continuously charged with 2.5 kg/hour of ethylene and 20 NL/hour of hydrogen, while the catalyst solution prepared in (4) mentioned above was continuously fed in an amount such that polyethylene resin was produced at a rate of 32 kg/hour. Polymerization temperature was maintained at 85°C.
The thus-obtained polyethylene resin slurry was continuously taken from the polymerization vessel, and unreacted hydrogen and ethylene were removed therefrom. The polyethylene resin was collected by filtration and dried to give a polyethylene resin powder. The polyethylene resin powder was melt-kneaded and extruded and pelletized.
The obtained polyethylene resin pellet had a density of 950 kg/m$^3$, a MFR of 8.0 g/10 min, and a melt strength (MS$_{160}$) of 100 mN as measured at 160°C.

Production Example 5

(1) Preparation of Organic-Modified Clay

An 1 L flask was charged with 300 mL of industrial alcohol ("Ekinen F-3" available from Japan Alcohol Trading Co., Ltd.) and 300 mL of distilled water, and then, 15. 0 g of concentrated aqueous hydrochloric acid and 35.3 g (100 mmol) of dimethylbehenylamine ("Armeen DM22D" available from Lion Corporation) were added. The mixed liquid was heated to 45°C and 100 g of synthetic hectorite ("Laponite RDS" available from Rockwood Additives Ltd.) was dispersed therein. The obtained slurry was heated to 60°C and stirred at that temperature for one hour. Then, the slurry was filtered. The solid was washed with 600 mL of water twice at 60°C, and then, dried at 85°C for 12 hours in a drier to give 118 g of organic-modified clay. The organic-modified clay was pulverized into a median particle diameter of 15 $\mu$m by a jet mill.

(2) Preparation of Catalyst Slurry

A 300 mL flask equipped with a thermometer and a reflux condenser was flashed with nitrogen, and then, charged with 25.0 g of the organic-modified clay, prepared in (1) mentioned above, and 108 mL of hexane. Then 0.4266 g of dimethylsilylene-(cyclopentadienyl)(4,7-dimethyl-1-indenyl)zirconium dichloride, and 142 mL of 20% triisobutylaluminum solution were added into the flask. The thus-obtained slurry was stirred at 60°C for 3 hours. The slurry was left to stand to a temperature of 45°C, and a supernatant was removed therefrom. The solid was washed five times with 200 mL of hexane, and finally 200 mL of hexane was added to give a catalyst slurry with a solid content of 9.74 wt.%.

(3) Production of Polyethylene Resin

A 2 L autoclave was charged with 1.2 L of hexane, 1.0 mL of a 20% triisobuthylaluminum solution and 105 mg (solid content: 13.1 mg) of the catalyst slurry, prepared in (2) mentioned above. The liquid content was heated to 85°C, and ethylene gas was continuously fed at a rate such that the partial pressure was maintained at 0.90 MPa. When 90 minutes elapsed, the pressure was released. The slurry was filtered and the solid was dried to give 50.2 g of a polyethylene resin (B1). The activity was 3,800 g/g catalyst.
The polyethylene resin had a MFR of 9. 9 g/10 min, a density of 956 kg/m$^3$ and a melt strength (MS$_{160}$) of 90 mN as measured at 160°C.

Production Example 6

(1) Preparation of Organic-Modified Clay

An 1 L flask was charged with 300 mL of industrial alcohol ("Ekinen F-3" available from Japan Alcohol Trading Co. , Ltd. ) and 300 mL of distilled water, and then, 12.5 g of concentrated aqueous hydrochloric acid and 42.4 g (120 mmol) of dimethylbehenylamine ("Armeen DM22D" available from Lion Corporation) were added. The mixed liquid was heated to 45°C, and 100 g of synthetic hectorite ("Laponite RDS" available from Rockwood Additives Ltd.) was dispersed therein. The obtained slurry was heated to 60°C and stirred at that temperature for one hour. Then, the slurry was filtered. The solid was washed with 600 mL of water twice at 60°C, and then, dried at 85°C for 12 hours in a drier to give 122 g of organic-modified clay. The organic-modified clay was pulverized into a median particle diameter of 15 $\mu$m by a jet mill.

(2) Preparation of Catalyst Slurry

A catalyst slurry was prepared by the same procedures as mentioned above in (1) except that 0.4406 g of dimethylsilylene(cyclopentadienyl)(2,4,7-trimethylindenyl)-zirconium dichloride was used instead of 0.4266 g of dimethylsilylene(cyclopentadienyl)(4,7-dimethyl-1-indenyl) zirconium dichloride. The catalyst slurry had a solid content of 10.9 wt.%.

(3) Production of Ethylene Copolymer Resin

A 2 L autoclave was charged with 1.2 L of hexane, 1.0 mL of a 20% triisobuthylaluminum solution and 86 mg (solid content: 9.4 mg) of the catalyst slurry, prepared in (2) mentioned above. The liquid content was heated to 65°C, and 17.5 g of 1-butene was added. An ethylene/hydrogen mixed gas (hydrogen content: 610 ppm) was continuously fed at a rate such that the partial pressure was maintained at 0.75 MPa. When 90 minutes elapsed, the pressure was released. The slurry was filtered and the solid was dried to give 17.9 g of an ethylene copolymer resin (B2). The activity was 1,900 g/g catalyst.

The ethylene copolymer resin had a MFR of 5.0 g/10 min, a density of 910 kg/m$^3$ and a melt strength (MS$_{160}$) of 95 mN as measured at 160°C.

Production Example 7

(1) Preparation of Organic-Modified Clay

An 1 L flask was charged with 300 mL of industrial alcohol ("Ekinen F-3" available from Japan Alcohol Trading Co. , Ltd.) and 300 mL of distilled water, and then, 17.5 g of concentrated aqueous hydrochloric acid and 49.4 g (140 mmol) of dimethylbehenylamine ("Armeen DM22D" available from Lion Corporation) were added. The mixed liquid was heated to 45°C, and 100 g of synthetic hectorite ("Laponite RDS" available from Rockwood Additives Ltd.) was dispersed therein. The obtained slurry was heated to 60°C and stirred at that temperature for one hour. Then, the slurry was filtered. The solid was washed with 600 mL of water twice at 60°C, and then, dried at 85°C for 12 hours in a drier to give 132 g of organic-modified clay. The organic-modified clay was pulverized into a median particle diameter of 15 $\mu$m by a jet mill.

(2) Preparation of Catalyst Slurry

A 300 mL flask equipped with a thermometer and a reflux condenser was flashed with nitrogen, and then, charged with 25.0 g of the organic-modified clay, prepared in (1) mentioned above, and 108 mL of hexane. Then 0.4406 g of dimethylsilylene-(cyclopentadienyl)(2,4,7-trimethylindenyl)zirconium dichloride, and 142 mL of 20% triisobutylaluminum solution were added into the flask. The thus-obtained slurry was stirred at 60°C for 3 hours. The slurry was left to stand to a temperature of 45°C, and a supernatant was removed therefrom. The solid was washed five times with 200 mL of hexane, and finally 200 mL of hexane was added to give a catalyst slurry with a solid content of 12.4 wt.%.

(3) Production of Ethylene Copolymer Resin

A 2 L autoclave was charged with 1.2 L of hexane, 1.0 mL of a 20% triisobuthylaluminum solution and 52 mg (solid content: 6.4 mg) of the catalyst slurry, prepared in (2) mentioned above. The liquid content was heated to 70°C, and 17.6 g of 1-butene was added. An ethylene/hydrogen mixed gas (hydrogen content: 590 ppm) was continuously fed at a rate such that the partial pressure was maintained at 0. 80 MPa. When 90 minutes elapsed, the pressure was released. The slurry was filtered and the solid was dried to give 61.8 g of an ethylene copolymer resin (B4). The activity was 9,700 g/g catalyst.
The ethylene copolymer resin had a MFR of 1.6 g/10 min, a density of 930 kg/m$^3$ and a melt strength (MS$_{160}$) of 200 mN as measured at 160°C.

Production Example 8

(1) Preparation of Organic-Modified Clay

Organic-modified clay was prepared by the same procedures as mentioned above in Production Example 6, (1).

(2) Preparation of Catalyst Slurry

A catalyst slurry was prepared by the same procedures as mentioned above in Production Example 6, (2).

(3) Production of Ethylene Copolymer Resin

A 2 L autoclave was charged with 1.2 L of hexane, 1.0 mL of a 20% triisobuthylaluminum solution and 58 mg (solid content: 7.0 mg) of the catalyst slurry, prepared in (2) mentioned above. The liquid content was heated to 80°C, and 8.3 g of 1-butene was added. An ethylene/hydrogen mixed gas (hydrogen content: 850 ppm) was continuously fed at a rate such that the partial pressure was maintained at 0.85 MPa. When 90 minutes elapsed, the pressure was released. The slurry was filtered and the solid was dried to give 49.0 g of an ethylene copolymer resin (B6). The activity was 7,000 g/g catalyst.
The ethylene copolymer resin had a MFR of 3.7 g/10 min, a density of 939 kg/m$^3$ and a melt strength (MS$_{160}$) of 130

mN as measured at 160°C.

Production Example 9

(1) Preparation of Organic-Modified Clay

Organic-modified clay was prepared by the same procedures as mentioned above in Production Example 6, (1).

(2) Preparation of Catalyst Slurry

A catalyst slurry was prepared by the same procedures as mentioned above in Production Example 6, (2).

(3) Production of Ethylene Copolymer Resin

A 2 L autoclave was charged with 1.2 L of hexane, 1.0 mL of a 20% triisobuthylaluminum solution and 70 mg (solid content: 8.4 mg) of the catalyst slurry, prepared in (2) mentioned above. The liquid content was heated to 80°C, and 2.4 g of 1-butene was added. An ethylene/hydrogen mixed gas (hydrogen content: 750 ppm) was continuously fed at a rate such that the partial pressure was maintained at 0.90 MPa. When 90 minutes elapsed, the pressure was released. The slurry was filtered and the solid was dried to give 63.0 g of an ethylene copolymer resin (B7). The activity was 7,500 g/g catalyst.
The ethylene copolymer resin had a MFR of 15.5 g/10 min, a density of 954 kg/m$^3$ and a melt strength ($MS_{160}$) of 40 mN as measured at 160°C.

Production Example 10

(1) Preparation of Organic-Modified Clay

Organic-modified clay was prepared by the same procedures as mentioned above in Production Example 6, (1).

(2) Preparation of Catalyst Slurry

A catalyst slurry was prepared by the same procedures as mentioned above in Production Example 6, (2).

(3) Production of Polyethylene Resin

A 2 L autoclave was charged with 1.2 L of hexane, 1.0 mL of a 20% triisobuthylaluminum solution and 70 mg (solid content: 8.4 mg) of the catalyst slurry, prepared in (2) mentioned above. The liquid content was heated to 80°C, and an ethylene/hydrogen mixed gas (hydrogen content: 550 ppm) was continuously fed at a rate such that the partial pressure was maintained at 0.90 MPa. When 90 minutes elapsed, the pressure was released. The slurry was filtered and the solid was dried to give 58.8 g of polyethylene resin (B8). The activity was 7,000 g/g catalyst.
The ethylene copolymer resin had a MFR of 5.9 g/10 min, a density of 959 kg/m$^3$ and a melt strength ($MS_{160}$) of 78 mN as measured at 160°C.

Production Example 11

(1) Preparation of Organic-Modified Clay

An 1 L flask was charged with 300 mL of industrial alcohol ("Ekinen F-3" available from Japan Alcohol Trading Co., Ltd.) and 300 mL of distilled water, and then, 18.8 g of concentrated aqueous hydrochloric acid and 49.1 g (120 mmol) of dimethylhexacosylamine ($Me_2N(C_{26}H_{53})$ : which was synthesized by the conventional process) were added. The mixed liquid was heated to 45°C, and 100 g of synthetic hectorite ("Laponite RDS" available from Rockwood Additives Ltd.) was dispersed therein. The obtained slurry was heated to 60°C and stirred at that temperature for one hour. Then, the slurry was filtered. The solid was washed with 600 mL of water twice at 60°C, and then, dried at 85°C for 12 hours in a drier to give 140 g of organic-modified clay. The organic-modified clay was pulverized into a median particle diameter of 14 μm by a jet mill.]

(2) Preparation of Catalyst Slurry

A 300 mL flask equipped with a thermometer and a reflux condenser was flashed with nitrogen, and then, charged with 25.0 g of the organic-modified clay, prepared in (1) mentioned above, and 108 mL of hexane. Then 0.4406 g of dimethylsilylene-(cyclopentadienyl)(2,4,7-trimethylindenyl)zirconium dichloride, and 142 mL of 20% triisobutylaluminum solution were added into the flask. The thus-obtained slurry was stirred at 60°C for 3 hours. The slurry was left to stand to a temperature of 45°C, and a supernatant was removed therefrom. The solid was washed five times with 200 mL of hexane, and finally 200 mL of hexane was added to give a catalyst slurry with a solid content of 12.0 wt.%.

(3) Production of Ethylene Copolymer Resin

A 2 L autoclave was charged with 1.2 L of hexane, 1.0 mL of a 20% triisobuthylaluminum solution and 75 mg (solid content: 9.0 mg) of the catalyst slurry, prepared in (2) mentioned above. The liquid content was heated to 80°C, and 8.3 g of 1-butene was added. An ethylene/hydrogen mixed gas (hydrogen content: 850 ppm) was continuously fed at a rate such that the partial pressure was maintained at 0. 85 MPa. When 90 minutes elapsed, the pressure was released. The slurry was filtered and the solid was dried to give 58.5 g of an ethylene copolymer resin (B9). The activity was 6,500 g/g catalyst.
The ethylene copolymer resin had a MFR of 4.0 g/10 min, a density of 941 kg/m$^3$ and a melt strength (MS$_{160}$) of 120 mN as measured at 160°C.

For comparison purposes, the following ethylene-$\alpha$-olefin copolymers were used.
Trade name "Petrocene 203" available from Tosoh Corporation, density: 919 kg/m$^3$, MFR: 8.0 g/10 min., MS$_{160}$: 50 mN
Trade name "Yumerit 4540" available from Ube-Maruzen Polyethylene Co., Ltd., density: 944 kg/m$^3$, MFR: 3.9 g/10 min., MS$_{160}$: 12 mN

(iv) Olefin polymer resin (III)

(iv)-1 As the low-density polyethylene produced by a high-pressure radical polymerization process, the following polyethylene resins were used.

Trade name "Petrocene 209" available from Tosoh Corporation, density: 924 kg/m$^3$, MFR: 45 g/10 min., MS$_{160}$: 3 mN
Trade name "Petrocene 248" available from Tosoh Corporation, density: 917 kg/m$^3$, MFR: 58 g/10 min., MS$_{160}$: 2 mN
Trade name "Petrocene 249" available from Tosoh Corporation, density: 916 kg/m$^3$, MFR: 70 g/10 min., MS$_{160}$: 1 mN
Trade name "Petrocene 353" available from Tosoh Corporation, density: 915 kg/m$^3$, MFR: 145 g/10 min., MS$_{160}$: un-measurable, below 1 mN

(iv) -2 As the rubber containing alkenyl aromatic compound units, and the ethylene-$\alpha$-olefin copolymer, the following olefin polymer resins were used.
TP-1: Ethylene-1-octene copolymer ("ENGAGE 8401" available from Dow Chemical Japan Ltd.; density: 885 kg/m$^3$, MFR (190°C) : 30 g/10 min., MS$_{160}$: 3 mN)
TP-2: Ethylene-1-octene copolymer ("ENGAGE 8402" available from Dow Chemical Japan Ltd.; density: 902 kg/m$^3$, MFR (190°C) : 30 g/10 min., MS$_{160}$: 3 mN)
TP-3: Styrene-ethylene-butene-styrene copolymer (SEBS) ("Tuftec H1052" available from Asahi Kasei Chemicals Corporation; density: 890 kg/m$^3$, MFR(230°C): 13 g/10 min., MS$_{160}$: 5 mN, styrene content: 18 wt.%)
TP-4: Ethylene-$\alpha$-olefin copolymer (ethylene-propylene copolymer "Tafmer P0680" available from Mitsui Chemicals Inc.; MFR(190°C): 0.4 g/10 min., density: 0.870 g/cm$^3$, MS$_{160}$: 30 mN)

Characteristics of the above-mentioned ethylene-$\alpha$-olefin copolymers (II) and the above-mentioned propylene polymer resins (III) are shown in Table 1.

| Properties | | Density | MFR | MS$_{160}$ | 230-200 × log (MFR) |
|---|---|---|---|---|---|
| Unit | | (kg/m$^3$) | (g/10min.) | (mN) | - |
| Production Examples | 1 | 950 | 4 | 120 | 110 |
| | 2 | 955 | 4 | 150 | 110 |
| | 3 | 950 | 2 | 170 | 170 |
| | 4 | 950 | 8 | 100 | 49 |
| | 5 | 956 | 9.9 | 90 | 31 |
| | 6 | 910 | 5 | 95 | 90 |
| | 7 | 930 | 1.6 | 200 | 189 |
| | 8 | 939 | 3.7 | 130 | 116 |
| | 9 | 954 | 15.5 | 40 | -8 |
| | 10 | 959 | 5.9 | 78 | 76 |
| | 11 | 941 | 4 | 120 | 110 |
| Petrocene203 | | 919 | 8 | 50 | 49 |
| Unerit 4540F | | 944 | 3.9 | 12 | 112 |
| TP-1 | | 885 | 30 | 3 | -65 |
| TP-2 | | 902 | 30 | 3 | -65 |
| TP-3 | | 890 | 13 | 5 | 7 |
| TP-4 | | 870 | 0.4 | 30 | 310 |

Example 1

Propylene polymer resin (I) (trade name "Sumitomo Noblene #AX674", propylene-ethylene copolymer, available from Sumitomo Chemical Co., Ltd., MFR: 65 g/10 min.), ethylene-$\alpha$-olefin copolymer (II) (ethylene copolymer resin prepared in Production Example 1) and olefin polymer resin (III) (high-pressure low-density polyethylene, trade name "Petrocene 248") were dry-blended at a mixing ratio of 80:10:10 by weight. The obtained mixture was melt-kneaded by a single screw extruder with a diameter of 50 mm (available from Placo Co., Ltd.). Barrel temperature was C1: 180°C, C2: 200°C, C3: 220°C and die head: 2200°C. The thus-obtained polypropylene resin composition was injection molded at a resin temperature of 220°C, an injection pressure of 1,000 kg/cm$^2$ and a mold temperature of 40°C. Mixing ratios of polymers, physical properties of polymer compositions, and evaluation results of appearances of molded products are shown in Table 2-1.

Examples 2-19

By the same procedures as described in Example 1, propylene polymer resin compositions were prepared and injection molded wherein propylene polymer resins (I), ethylene-$\alpha$-olefin copolymers (II) and olefin polymer resins (III), shown in Table 1, were used. Production conditions and evaluation results are shown in Table 2-1 and Table 2-2.

Comparative Examples 1-6

By the same procedures as described in Example 1, propylene polymer resin compositions were prepared and injection molded wherein propylene polymer resins (I), ethylene-$\alpha$-olefin copolymers (II) and olefin polymer resins (III), shown in Table 1, were used. Production conditions and evaluation results are shown in Table 2-2.

Table 2-1

| | Polymers | | MFR | Examples | | | | | | | | | | | | |
|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 |
| Mixing ratio (weight parts) | Propylene polymer resin (I) | AX674 | 65 | 80 | 90 | 80 | 80 | - | 80 | - | 80 | 80 | 80 | 80 | 80 | 80 |
| | | AX574 | 45 | - | - | - | - | 75 | - | 70 | - | - | - | - | - | - |
| | | AZ564 | 28 | - | - | - | - | - | - | - | - | - | - | - | - | - |
| | Etylene-$\alpha$-olefin copolymer (II) | Prod. Ex. 1 | 4 | 10 | 5 | 10 | 10 | 10 | | | | - | - | - | - | - |
| | | Prod. Ex. 2 | 4 | - | - | - | - | - | 10 | 15 | - | - | - | - | - | - |
| | | Prod. Ex. 3 | 2 | - | - | - | - | - | - | - | 10 | - | - | - | - | - |
| | | Prod. Ex. 4 | 8 | - | - | - | - | - | - | - | - | 10 | - | - | - | - |
| | | Prod. Ex. 5 | 9.9 | - | - | - | - | - | - | - | - | - | 10 | - | - | - |
| | | Prod. Ex. 6 | 5 | - | - | - | - | - | - | - | - | - | - | 10 | - | - |
| | | Prod. Ex. 7 | 1.6 | - | - | - | - | - | - | - | - | - | - | - | 10 | - |
| | | Prod. Ex. 8 | 3.7 | - | - | - | - | - | - | - | - | - | - | - | - | 10 |
| | | Prod. Ex. 9 | 15.5 | - | - | - | - | - | - | - | - | - | - | - | - | - |
| | | Prod. Ex. 10 | 5.9 | - | - | - | - | - | - | - | - | - | - | - | - | - |
| | | Prod. Ex. 11 | 4 | - | - | - | - | - | - | - | - | - | - | - | - | - |
| | | Yumerit4540F | | - | - | - | - | - | - | - | - | - | - | - | - | - |
| | | Petrocene203 | | - | - | - | - | - | - | - | - | - | - | - | - | - |

(continued)

| Polymers | | | MFR | Examples | | | | | | | | | | | | |
|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 |
| | High-pressure low-density polyethylene | Petrocene209 | 45 | 10 | - | - | - | - | - | - | - | - | - | - | - | - |
| | | Petrocene248 | 58 | - | 5 | - | - | - | - | - | - | - | - | - | - | - |
| | | Petrocene249 | 70 | - | - | 10 | - | 15 | - | 15 | 10 | 10 | 10 | 10 | 10 | 10 |
| | | Petrocene353 | 145 | - | - | - | 10 | - | 10 | - | - | - | - | - | - | - |
| | Olefin polymer resin (III) | *1 | TP-1 | - | - | - | - | - | - | - | - | - | - | - | - | - |
| | | | TP-2 | - | - | - | - | - | - | - | - | - | - | - | - | - |
| | | | TP-3 | - | - | - | - | - | - | - | - | - | - | - | - | - |
| | | | TP-4 | - | - | - | - | - | - | - | - | - | - | - | - | - |
| Physical property | MFR | | g/10min. (230°C) | 61 | 63 | 62 | 66 | 50 | 66 | 42 | 55 | 60 | 62 | 60 | 47 | 50 |
| | Melt strength | | mN(190°C) | 6 | 4 | 6 | 5.5 | 6.5 | 5.5 | 10 | 12 | 3.5 | 3.8 | 4 | 20 | 4.5 |
| Product appearance | Appearance (Eye observation) | | Foaming agent not mixed | A | B | A | A | B | B | B | B | A | A | B | B | B |
| | | | Foaming agent mixed | A | B | A | A | B | B | B | B | A | A | B | B | B |

*1 Alkenyl aromatic compound unit-containing rubber or ethylene-α-olefin copolymer

Table 2-2

| Mixing ratio (weight parts) | Polymers | | MFR | Examples | | | | | | Comparative Examples | | | | | |
|---|---|---|---|---|---|---|---|---|---|---|---|---|---|---|---|
| | | | | 14 | 15 | 16 | 17 | 18 | 19 | 1 | 2 | 3 | 4 | 5 | 6 |
| | Propylene polymer resin (I) | AX674 | 65 | 80 | 80 | 80 | 80 | 80 | 80 | 100 | 80 | 80 | 80 | - | 80 |
| | | AX574 | 45 | - | - | - | - | - | - | - | - | - | - | - | - |
| | | AZ564 | 28 | - | - | - | - | - | - | - | - | - | - | 80 | - |
| | Etylene-$\alpha$-olefin copolymer (II) | Prod. Ex. 1 | 4 | - | - | - | 10 | 10 | 10 | - | 20 | - | - | 10 | 10 |
| | | Prod. Ex. 2 | 4 | - | - | - | - | - | - | - | - | - | - | - | - |
| | | Prod. Ex. 3 | 2 | - | - | - | - | - | - | - | - | - | - | - | - |
| | | Prod. Ex. 4 | 8 | - | - | - | - | - | - | - | - | - | - | - | - |
| | | Prod. Ex. 5 | 9.9 | - | - | - | - | - | - | - | - | - | - | - | - |
| | | Prod. Ex. 6 | 5 | - | - | - | - | - | - | - | - | - | - | - | - |
| | | Prod. Ex. 7 | 1.6 | - | - | - | - | - | - | - | - | - | - | - | - |
| | | Prod. Ex. 8 | 3.7 | - | - | - | - | - | - | - | - | - | - | - | - |
| | | Prod. Ex. 9 | 15.5 | 10 | - | - | - | - | - | - | - | - | - | - | - |
| | | Prod. Ex. 10 | 5.9 | - | 10 | - | - | - | - | - | - | - | - | - | - |
| | | Prod. Ex. 11 | 4 | - | - | 10 | - | - | - | - | - | - | - | - | - |
| | | Yumerit4540F | | - | - | - | - | - | - | - | - | 10 | | - | - |
| | | Petrocene203 | | - | - | - | - | - | - | - | - | - | 10 | - | - |

(continued)

| Polymers | | | MFR | Examples | | | | | | Comparative Examples | | | | | |
|---|---|---|---|---|---|---|---|---|---|---|---|---|---|---|---|
| | | | | 14 | 15 | 16 | 17 | 18 | 19 | 1 | 2 | 3 | 4 | 5 | 6 |
| | High-pressure low-density polyethylene | Petrocene209 | 45 | - | - | - | - | - | - | - | - | - | - | - | - |
| | | Petrocene248 | 58 | - | - | - | - | - | - | - | - | - | - | - | - |
| | | Petrocene249 | 70 | 10 | 10 | 10 | - | - | - | - | - | 10 | 10 | 10 | - |
| | | Petrocene353 | 145 | - | - | - | - | - | - | - | - | - | - | - | - |
| | Olefin polymer resin (III) *1 | TP-1 | | - | - | - | 10 | - | - | - | - | - | - | - | - |
| | | TP-2 | | - | - | - | - | 10 | - | - | - | - | - | - | - |
| | | TP-3 | | - | - | - | - | - | 10 | - | - | - | - | - | - |
| | | TP-4 | | - | - | - | - | - | - | - | - | - | - | - | 10 |
| Physical property | MFR | | g/10min. (230°C) | 68 | 63 | 50 | 50 | 50 | 48 | 65 | 28 | 33 | 38 | 17 | 40 |
| | Melt strength | | mN(190°C) | 5 | 5.5 | 4 | 6 | 6.5 | 6.5 | 1 | 7 | 10 | 1.5 | 13 | 10 |
| Product appearance | Appearance (Eye observation) | Foaming agent not mixed | | A | B | B | A | A | B | A | D | C | C | D | D |
| | | Foaming agent mixed | | A | B | B | A | A | B | D | D | D | D | D | D |

*1 Alkenyl aromatic compound unit-containing rubber or ethylene-α-olefin copolymer

Industrial Applicability

The resin composition for injection molding according to the present invention is suitable for the production of an injection molded article, especially an injection molded foam article, exhibiting enhanced impact strength at a low temperature and having no or minimized flow marks on the surface thereof.

The resin composition for injection molding according to the present invention is used for the production of various injection molded articles, especially injection molded foam articles. As specific examples of the injection molded articles, there can be mentioned automobile interior parts such as an instrument panel and a column cover; automobile exterior parts such as a fender, a bumper, a side molding, a mud guard and a mirror cover; housings for home electric appliances; and general goods.

Of these uses, the resin composition is especially suitable for those in which good appearance as well as good stiffness rigidity, heat resistance and impact resistance are desired, which include automobile interior parts and exterior parts such as a fender, a bumper, a side molding, a mud guard and a mirror cover.

**Claims**

1. A resin composition for injection molding **characterized by** comprising:

   (I) 70 to 90 parts by weight of a propylene polymer resin having a melt flow rate (MFR) of at least 30 g/10 min. but smaller than 200 g/10 min. as measured at a temperature of 230°C according to ASTM D-1238,
   (II) 5 to 25 parts by weight of an ethylene-$\alpha$-olefin copolymer having a melt strength ($MS_{160}$) of larger than 50 mN but not larger than 300 mN as measured at a temperature of 160°C, and
   (III) 5 to 25 parts by weight of an olefin polymer resin having a density of at least 850 kg/m$^3$ but not larger than 930 kg/m$^3$ as measured according to JIS K6760, and a melt strength ($MS_{160}$) of smaller than 30 mN as measured at a temperature of 160°C,
   wherein the sum of the three components (I), (II) and (III) is 100 parts by weight.

2. The resin composition for injection molding according to claim 1, which has a MFR of at least 30 g/10 min. but smaller than 200 g/10 min. as measured at a temperature of 230°C according to ASTM D-1238.

3. The resin composition for injection molding according to claim 1 or 2, which has a melt strength ($MS_{190}$) in the range of 2 mN to 30 mN as measured at a temperature of 190°C and a winding rate of 10 m/min.

4. The resin composition for injection molding according to any one of claims 1 to 3, wherein the propylene polymer resin (I) is a propylene homopolymer or a propylene-ethylene block copolymer.

5. The resin composition for injection molding according to any one of claims 1 to 4, wherein the ethylene-$\alpha$-olefin copolymer (II) satisfies the following requirements (A), (B) and (C):

   (A) the density (d) is at least 920 kg/m$^3$ but not larger than 960 kg/m$^3$ as measured by a density-gradient tube method according to JIS K6760,
   (B) the melt flow rate (MFR) is at least 1 g/10 min. but not larger than 30 g/10 min. as measured at a temperature of 190°C under a load of 2.16 kg,
   (C) the melt strength ($MS_{160}$; mN) as measured at a temperature of 160°C and the melt flow rate (MFR) as measured at a temperature of 190°C under a load of 2.16 kg satisfy the following formula (1):

   $$MS_{160} > 230 - 200 \times \log(MFR) \qquad (1)$$

6. The resin composition for injection molding according to any one of claims 1 to 5, wherein the propylene polymer resin (III) is at least one polymer selected from the group consisting of a polyolefin resin made by a high-pressure radical polymerization process, a rubber comprising alkenyl aromatic compound units, and an ethylene-$\alpha$-olefin copolymer.

7. An injection molded foam article made from the resin composition for injection molding as claimed in any one of claims 1 to 6.

8. The injection molded foam article according to claim 7, which has an expansion ratio of at least 1.8 but not larger than 10, and has a multi-layer structure comprised of a non-foam surface layer and an interior foam layer with bubbles having an average diameter of not larger than 200 $\mu$m.

9. A method for producing an injection molded foam article **characterized in that**:

the resin composition for injection molding as claimed in any one of claims 1 to 6, and carbon dioxide and/or a carbon dioxide-generating foaming agent are fed to an injection molding machine; and then, the resin composition combined with the carbon dioxide and/or the carbon dioxide-generating chemical foaming agent is injected into a mold equipped in the injection molding machine, thereby to be expansion-molded.

10. The method for producing an injection molded foam article according to claim 9, wherein the carbon dioxide is gaseous carbon dioxide and/or supercritical carbon dioxide.

11. The method for producing an injection molded foam article according to claim 9, wherein the carbon dioxide-generating chemical foaming agent is a chemical foaming agent selected from the group consisting of sodium bicarbonate, sodium hydrogen carbonate and ammonium carbonate.

12. The method for producing an injection molded foam article according to any one of claims 9 to 11, wherein the injection molding machine used is an injection molding machine equipped with a movable mold.

13. The method for producing an injection molded foam article according to any one of claims 9 to 12, wherein the injection molding machine used is provided with a gas counter pressure system.

## INTERNATIONAL SEARCH REPORT

| | International application No. |
| --- | --- |
| | PCT/JP2011/072647 |

### A. CLASSIFICATION OF SUBJECT MATTER
*C08L53/00*(2006.01)i, *C08J9/08*(2006.01)i, *C08L23/08*(2006.01)i, *C08L23/10*(2006.01)i

According to International Patent Classification (IPC) or to both national classification and IPC

### B. FIELDS SEARCHED

Minimum documentation searched (classification system followed by classification symbols)
C08L53/00, C08J9/08, C08L23/08, C08L23/10

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2002-283382 A  (Grand Polymer Co., Ltd.), 03 October 2002 (03.10.2002), claims; paragraphs [0005], [0025] to [0030]; examples (Family: none) | 1-13 |
| Y | JP 7-62131 A  (Polyplastics Co., Ltd.), 07 March 1995 (07.03.1995), claims; paragraph [0001]; examples (Family: none) | 1-13 |
| Y | JP 2007-169339 A  (Tosoh Corp.), 05 July 2007 (05.07.2007), entire text & US 2009/0137755 A1    & EP 1964860 A1 & WO 2007/077732 A1    & CN 101341176 A | 1-13 |

☒ Further documents are listed in the continuation of Box C.    ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 22 November, 2011 (22.11.11) | 20 December, 2011 (20.12.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

| | INTERNATIONAL SEARCH REPORT | International application No. |
| --- | --- | --- |
| | | PCT/JP2011/072647 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2004-300260 A  (Sumitomo Chemical Co., Ltd.), 28 October 2004 (28.10.2004), claims; paragraphs [0011], [0012] (Family: none) | 1-13 |
| Y | JP 2004-149688 A  (Mitsui Chemicals, Inc.), 27 May 2004 (27.05.2004), claims; paragraphs [0001], [0030], [0031] (Family: none) | 1-13 |
| A | JP 2002-120252 A  (Grand Polymer Co., Ltd.), 23 April 2002 (23.04.2002), claims (Family: none) | 1-13 |
| A | JP 2005-240025 A  (JSP Corp.), 08 September 2005 (08.09.2005), claims; paragraphs [0033], [0034] & US 2005/0164000 A1    & EP 1566255 A1 & CN 1689781 A | 1-13 |
| A | JP 2003-528190 A  (Dow Global Technologies Inc.), 24 September 2003 (24.09.2003), entire text & US 2001/0036975 A1    & EP 1276796 A1 & WO 2001/070860 A2    & CN 1426434 A | 1-13 |
| A | JP 2001-226514 A  (Chisso Corp.), 21 August 2001 (21.08.2001), claims; paragraph [0021] (Family: none) | 1-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006124520 A
- JP 2001515114 A